# EUROPEAN PATENT APPLICATION

(11) **EP 4 422 233 A1**
(43) Date of publication of application: **28.08.2024**
(21) Application number: 23305249.7
(22) Date of filing: 24.02.2023
(51) Int. Cl.: H04W 8/18

(54) **VIRTUAL SUBSCRIBER IDENTITY MODULE DISTRIBUTION**

(71) Applicant: Oasis Smart Sim Europe, 78100 Saint-Germain-en-Laye (FR)
(72) Inventor: CAO, Patrick, Singapour (SG); LEROUX, Olivier, SAINT-GERMAIN-EN-LAYE (FR)
(74) Representative: Bandpay & Greuter

(57) **Abstract**

The disclosure notably relates to a virtual Subscriber Identity Module (SIM) distribution server comprising a network communication interface, a memory having stored thereon one or more SIMs. The memory includes a Hardware Security Module (HSM) having stored thereon, for each respective SIM, respective data. The processor is configured for accessing the memory to selectively retrieve each SIM, including accessing the HSM to selectively retrieve the respective data of each SIM. The processor is configured for generating and executing a plurality of pods, each containing a dispatcher and a plurality of SIMs. The processor is configured for receiving a SIM affectation request. Upon receiving the SIM affectation request, selecting a respective pod. By the dispatcher of the respective pod, establishing a secure connection for exchanging SIM-related data, selecting a respective SIM of the respective pod, and exchanging data related to the respective SIM.

This constitutes an improved solution for SIM distribution.

## Description

### TECHNICAL FIELD

The disclosure relates to the field of computer programs and systems, and more specifically to a server, a client device and a method for virtual Subscriber Identity Module (SIM) distribution.

### BACKGROUND

A number of systems and programs are offered on the market for authenticating devices to network operators and authorize telecommunications. A SIM card is an integrated circuit (IC) intended to securely store the international mobile subscriber identity number and its related key, which are used to identify and authenticate subscribers on, for example, mobile telephony devices. The SIM card is usually made of PVC with embedded contacts and semiconductors. All of the data comprised by the SIM card (also known as SIM data) is contained in a universal integrated circuit card (UICC) with the SIM as its primary component. By abuse of language, the term SIM may refer to the UICC and the term "SIM card" refers to the entire unit and not simply the UICC.

Other SIM technologies include embedded SIM (eSIM). An eSIM is an integrated circuit that is soldered directly to the printed circuit board of the connected or mobile device and cannot not be removed from a device. Standards are offered to reprogram an eSIM with new SIM data at will.

Within this context, there is still a need for improved virtual SIM distribution solutions.

### SUMMARY

It is therefore provided a virtual Subscriber Identity Module (SIM) distribution server. The server comprises a network communication interface. The server also comprises a memory having stored thereon one or more SIMs. Each SIM includes confidential data, identification data, and operating data. The memory includes a Hardware Security Module (HSM) having stored thereon, for each respective SIM, respective data of the respective SIM. The respective data include at least the confidential data of the respective SIM. Additionally, the server comprises a processor coupled to the network communication interface and to the HSM. The processor is configured for accessing the memory to selectively retrieve each SIM. Accessing the memory includes accessing the HSM to selectively retrieve the respective data of each SIM stored on the HSM. The processor is also configured for generating and executing a plurality of pods. Each pod contains a dispatcher and a plurality of SIMs retrieved from the memory. The processor is also configured for receiving a SIM affectation request via the network communication interface. The processor is also configured, upon receiving the SIM affectation request via the network communication interface, for selecting a respective pod. The processor is also configured, by the dispatcher of the respective pod, for establishing a secure connection for exchanging SIM-related data via the network communication interface. The processor is also configured for selecting a respective SIM of the respective pod. Additionally, the processor is also configured for exchanging data related to the respective SIM via the network communication interface.

The server may comprise one or more of the following:
- the processor is configured to receive a plurality of inbound requests, and to dynamically affect SIMs as the plurality of inbound requests increases or decreases;
- upon receiving a SIM affectation request via the network communication interface, the processor is further configured to perform, alternatively:
   -- generating a batch comprising a plurality of signed certificates, each signed certificate being associated with a respective SIM; or
   -- generating on demand the signed certificates when dynamically affecting the one or more SIMs;
- the memory further comprises a database, the database having stored thereon one or more client identifiers, the processor being further configured to associate a stored client identifier corresponding to the client with the SIM-related data upon affecting the SIM to the client;
- for each SIM:
   -- the confidential data includes an authentication key and/or an operator code;
   -- the identification data includes an integrated circuit card identifier (ICCID) and/or an international mobile subscriber identity (IMSI); and/or
   -- the operating data includes an authentication counter;
- the confidential data of each SIM includes an authentication key and/or an operator code, the processor being configured for:
   -- upon receiving a telecommunication request for the respective SIM, sending the identification data via the network communication interface;
   -- upon receiving an authorization request, generating authorization data from the authentication key, the operator code or the authentication counter, and sending the authorization data via the network communication interface; and
   -- increasing the authentication counter upon reception of an authentication failure notification via the network communication interface.

It is also provided a client device comprising a network communication interface and a processor configured for communicating via the network communication interface with the server, so as to send a SIM affectation request to the server, and to exchange SIM-related data with the server via a secure connection.

It is also provided a method carried out by the virtual SIM distribution server in communication via a communication network with a plurality of client devices. The method comprises, by a client device, sending a SIM affectation request to the server. The method also comprises, by the server, receiving the SIM affectation request. The method also comprises, upon receiving the SIM affectation request by the server, by the server, selecting a respective pod. By the dispatcher of the respective pod, establishing a secure connection for exchanging SIM-related data with the client device. By the server, selecting a respective SIM of the respective pod. The method also comprises, exchanging data related to the respective SIM between the server and the client device.

The method may comprise one or more of the following:
- the method further comprises, by the server, receiving a plurality of inbound requests from several client devices, and dynamically affecting SIMs as the plurality of inbound requests increases or decreases;
- the method further comprises, by the server upon receiving a SIM affectation request, performing, alternatively:
   --generating a batch comprising a plurality of signed certificates, each signed certificate being associated with a respective SIM; or
   --generating on demand the signed certificates when dynamically affecting the one or more SIMs;
- the method further comprises, by the server, associating a stored client identifier corresponding to the client with the SIM-related data upon affecting the SIM to the client;
- for each SIM:
   -- the confidential data includes an authentication key and/or an operator code;
   -- the identification data includes an integrated circuit card identifier (ICCID) and/or an international mobile subscriber identity (IMSI); and/or
   -- the operating data includes and authentication counter;
- the confidential data of each SIM includes an authentication key and/or an operator code and wherein, by the server, performing:
   -- upon receiving a telecommunication request for the respective SIM, sending the identification data via the network communication interface;
   -- upon receiving an authorization request, generating authorization data from the authentication key, the operator code, the authentication counter, sending the authorization data via the network communication interface; and
   -- increasing the authentication counter upon reception of an authentication failure notification via the network communication interface.

It is further provided a computer program for the virtual SIM distribution server and/or for the client device. The program comprises instructions for performing the method.

It is further provided a computer readable storage medium having recorded thereon a computer program.

### BRIEF DESCRIPTION OF THE DRAWINGS

Non-limiting examples will now be described in reference to the accompanying drawings, where:
- FIG.s 1 to 7 illustrate the provided solutions.

### DETAILED DESCRIPTION

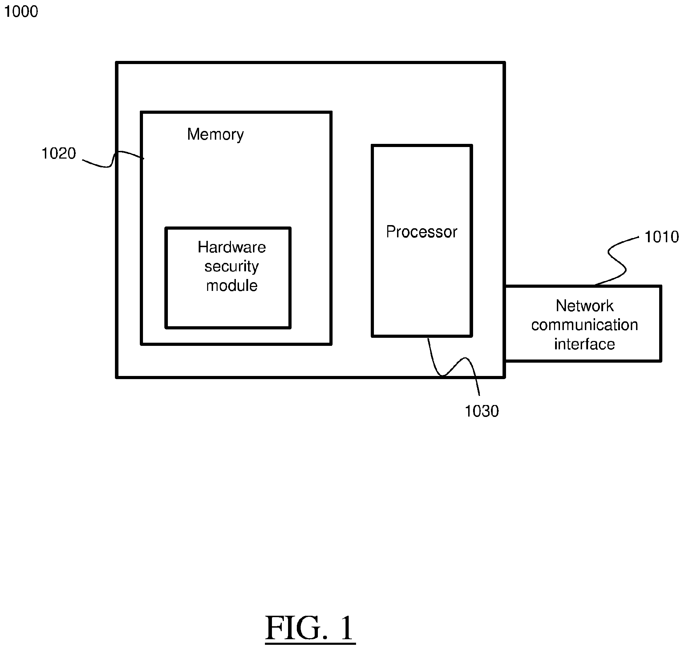

With reference to FIG. 1, it is proposed a virtual Subscriber Identity Module (SIM) distribution server 1000. The server 1000 comprises a network communication interface 1010. The server 1000 also comprises a memory 1020 having stored thereon one or more SIMs. Each SIM includes confidential data, identification data, and operating data. The memory 1020 includes a Hardware Security Module 1030 (HSM) having stored thereon, for each respective SIM, respective data of the respective SIM. The respective data include at least the confidential data of the respective SIM. Additionally, the server 1000 comprises a processor 1030 coupled to the network communication interface 1010 and to the HSM.

The processor 1030 is configured for accessing the memory 1020 to selectively retrieve each SIM. Accessing the memory 1020 includes accessing the HSM to selectively retrieve the respective data of each SIM stored on the HSM. The processor 1030 is also configured for generating and executing a plurality of pods. Each pod contains a dispatcher and a plurality of SIMs retrieved from the memory 1020. The processor 1030 is also configured for receiving a SIM affectation request via the network communication interface 1010.

The processor 1030 is also configured, upon receiving the SIM affectation request via the network communication interface 1010, for selecting a respective pod. The processor 1030 is also configured, by the dispatcher of the respective pod, for establishing a secure connection for exchanging SIM-related data via the network communication interface 1010. The processor 1030 is also configured for selecting a respective SIM of the respective pod. Additionally, the processor 1030 is also configured for exchanging data related to the respective SIM via the network communication interface 1010.

Such a server 1000 constitutes an improved solution for virtual SIM distribution. Indeed, the virtual SIM distribution is secure, highly efficient and seamless for the end user. This is thanks to the server 1000 relying on the plurality of pods for dispatching the plurality of SIMS. As the plurality of pods are configured to exchange the data related to the respective SIM to the client after receiving the SIM affectation request, the server 1000 allows the authentication of a device on an operator's network on a cloud environment. On one hand, on the device's end, hardware needed for allowing SIM authentication for integrating an operator network are reduced, and could even be eliminated. Indeed, there is no need for the device to have hardware suitable for SIM authentication, e.g., a SIM card slot or an integrated eSIM; the integration on the operator's network is seamless to the end device. On the other hand, on the server's 1000 end, the method allows a highly efficient and dynamic distribution thanks to the generation of the plurality of pods. Each pod may comprise a plurality (hundreds, even thousands) of SIMs, and these SIMs may be added on demand. In other words, the memory and HSM may be capable to add new SIMs on demand or to delete existing SIMs stored in the HSM.

The server 1000 allows a high scalability, compared for example, to solutions that would use SIM racks. Such solutions may for example rely on SIM racks which store a plurality of SIM cards. However, such services are limited to the actual quantity of (physical) SIM cards stored in such rack. In other words, such solutions may be bound to the quantity of physical SIM cards that are hosted on each rack. In contrast, the server improves the quantity of SIMs available for distribution and moreover has a high capacity for reuse and it is suitable for massive deployment of connected objects over the operator network. Indeed, the pods are threads in the processor which allows a high parallelization of the SIM distribution. This is specially useful in the context of the internet-of-things for example, where one may expect even one million new connected devices per hour. Within this context, the solution provided by the server does not increase the material bill of the connected objects while preserving or increasing the security of access to the network. It mutualizes the infrastructure to the client devices in a seamless manner (as SIM distribution is completely digitized). Furthermore, it is fully compatible with operator network standards so that deployment times are significantly reduced.

In addition, the virtual SIM distribution is particularly reliable and secure. Indeed, thanks to the fact that the processor 1030 is configured to access the HSM to selectively retrieve the respective data of each SIM stored on the HSM, which includes at least the confidential data of the respective SIM, and the generation and execution of the pods, the confidential data constitutive of a SIM is always secure. Indeed, the HSM provides a highly secure storage, and thus the confidential data is protected from security vulnerabilities while not in use. In addition, the affecting of the SIM meets protocol and security requirements, e.g., defined by the GSMA (SGP.01, SGP.02, SGP.11). Moreover, when the pod is generated and executed, the HSM does not need to be accessed anymore, thus reducing security vulnerabilities when distributing the SIM; data sharing is performed in real-time between the HSM and the pods. In addition, thanks to the server exchanging data related to the respective SIM via the network communication interface, the server is fully compatible existing eSIM frameworks. Thus, a client device may be able to communicate through an operator network using the SIM distributed by the server as if it was using a local SIM, e.g., in the form of a SIM card or an eSIM, with the difference that the SIM distributed by the server is completely virtual/remote. The integration into the operator network by the client device is seamless and transparent to the end user, as the exchange occurs on network rather than locally in the client device.

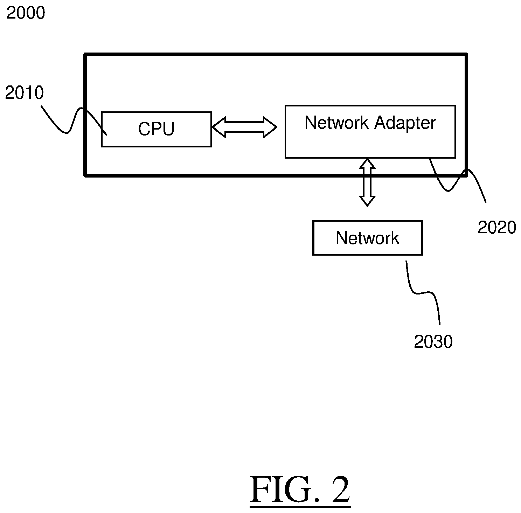

With reference to FIG. 2, it is further proposed a client device 2000 comprising a network communication interface 2020 and a processor 2010. The processor 2010 is configured for communicating via the network communication interface 2020 with the server 1000 (for example through a network 2030), so as to send a SIM affectation request to the server 1000. Additionally, the processor 2010 is configured to exchange SIM-related data with the server 1000 via a secure connection.

The client device 2000 may be, for example a mobile device such as a smartphone, or a tablet device; alternatively any intelligent device, for example mounted on a vehicle or a home premise. The client device may be alternatively be deprived from a SIM card slot.

Referring to both FIG.s 1 and 2, it is further proposed a method carried out by the virtual SIM distribution server 1000 in communication, via a communication network, with a plurality of client devices 2000 (also called "system method"). The system method comprises, by a client device of the plurality of client devices, sending a SIM affectation request to the server 1000. The system method also comprises, by the server 1000, receiving the SIM affectation request. The system method also comprises, upon receiving the SIM affectation request by the server 1000, by the server 1000, selecting a respective pod. The system method also comprises, by the dispatcher of the respective pod, establishing a secure connection for exchanging SIM-related data with the client device. The system method also comprises, by the server 1000, selecting a respective SIM of the respective pod. The system method also comprises, exchanging data related to the respective SIM between the server 1000 and the client device.

It Is further proposed a method carried out by the virtual SIM distribution server 1000 (also called "server method"). The server method comprises accessing the memory 1020 to selectively retrieve each SIM. Accessing the memory 1020 includes accessing the HSM to selectively retrieve the respective data of each SIM stored on the HSM. The server method also comprises generating and executing a plurality of pods, each pod containing a dispatcher and a plurality of SIMs retrieved from the memory 1020. The server method also comprises receiving a SIM affectation request. upon receiving the SIM affectation request, The server method also comprises selecting a respective pod. The server method also comprises, by the dispatcher of the respective pod, establishing a secure connection for exchanging SIM-related data. The server method also comprises selecting a respective SIM of the respective pod. The server method also comprises exchanging data related to the respective SIM.

It is further proposed a method carried out by the client device (also called "client method"). The client method comprises communicating with the server 1000, so as to send a SIM affectation request to the server 1000. Additionally, the client method exchanges SIM-related data with the server 1000.

The methods described herein are computer-implemented. This means that steps (or substantially all the steps) of the methods are executed by at least one computer, or any system alike. Thus, steps of the methods are performed by the system, server or device are performed possibly fully automatically, or, semiautomatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system (e.g., the server 1000 or the client device) may comprise a processor 1030 coupled to a memory 1020, the memory 1020 having recorded thereon a computer program comprising instructions for performing the method.

The computer program may comprise instructions executable by a virtual SIM distribution server 1000 and/or by a client device (for example, only by the virtual SIM distribution server or only by the client device), the instructions comprising means for causing the above system to perform the methods. The program may be recordable on any data storage medium, including the memory of the distribution server 1000 and/or for the client device. The program may for example be implemented in digital electronic circuitry, or in computer hardware, firmware, software, or in combinations of them. The program may be implemented as an apparatus, for example a product tangibly embodied in a machine-readable storage device for execution by a programmable processor 1030. Method steps may be performed by a programmable processor 1030 executing a program of instructions to perform functions of the method by operating on input data and generating output. The processor 1030 may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may for example be stored and executed on the server 1000 in a cloud computing environment, the server 1000 being in communication across a network with one or more client devices. In such a case a processing unit executes the instructions comprised by the program, thereby causing the method to be performed on the cloud computing environment.

The server 1000 is for virtual SIM distribution. In other words, the server is configured for providing to one or more (e.g., a plurality such as 100 or even 1,000 or more) of client devices with data related to a SIM so as to allow authentication of the one or more client devices to an operator network associated to the SIM (e.g., a telephony network such as a 3G, 4G or 5G network) and thereby allow the exchange of data (e.g., voice, text or other data such as multimedia data) through said operator network.

The operator network may be any operator network, such as a 2G operator network, a 3G operator network, a 4G operator network or a 5G operator network. The 2G operator network is a second generation cellular network under the GSM standard. The 2G operator network is essentially dedicated to telephony by implementing the same time switching technique as digital fixed telephony. The 2G operator network makes it possible to establish an electronic path between the sender of the call and its recipient which is a two-way and symmetrical link that only the two communicators can use for the duration of the call. This may be referred to as a circuit-switched technique.

In the 2G operator network, the application giving behavior to the SIM is STK (SIM Toolkit). For example, in a SIM card, said STK allows the UICC to interact with the outside world in a specific way thanks to programmed commands.

The 3G operator network differs from the 2G operator network by using a different frequency band but also because it is free from GSM standards. The 3G operator network complies with UMTS standards and allows a high-speed connection. This connection facilitates access to websites and various multimedia. ST"s counterpart for 3G is USAT (USIM Application Toolkit). The 3G operator network may further comprise the use of a Java card, which is a smart card operating system capable of running applications written in Java. The Java card may consist of three parts an API, an environment to run programs and a virtual machine.

The 4G operator network allows access to a higher speed than that of 3G.

The 5G operator network adds security compared to 4G operator network. Indeed the 5G SIM is supposed to be an inviolable secure element. The 5G operator network may be designed to ensure the total anonymization of the subscriber because this element currently allows the espionage of communications or the cloning of SIM. Current mobile security is essentially based on the confidentiality of authentication elements of the mobile operator" network. The 5G operator network achieves this by encrypting the ISMI (International Subscriber Mobil Identity) code.

The server 1000 comprises a network interface. The network interface may comprise for example one or more Ethernet ports, one or more WI-FI-ports and/or one or more operator network interfaces such as GSMA interfaces (e.g., an ES3 interface). The network interface may be configured to communicate via a communication network (e.g., WI-FI network and/or another type of network) with a plurality of client devices.

The server 1000 comprises a memory 1020 having stored thereon one or more SIMs, that is, a non-volatile memory such as one or more hard drives and/or solid state drives (SSDs). A SIM is a data structure (e.g., a collection of organized data) comprising data for identification and authentication on an operator network, e.g., a GSM, 3G, 4G or 5G network.

Each SIM includes, as widely known from the field of telecommunications and SIM technology., confidential data, identification data, and operating data. The confidential data may be data supposed to be known only to the operator network, which may be compared by the operator network so as to allow the authorization for accessing the operator network. The confidential data may include for example one or more authentication keys, confidential keys or encryption keys. The identification data are data that allows the identification of client and/or operator. In other words, the identification data designates the client device to be associated with the operator network. The identification data may include serial code and/or number. The operating data are other data constitutive of the SIM and that allow Its operations for authentication and/or data transmission, for instance for verifying that an authentication is performed correctly.

The confidential data may include an authentication key, sometimes denoted as "Ki". The authentication key may be a 128-bit value used for authenticating the SIM to the operator network (e.g., a GSM mobile network). Additionally or alternatively, the confidential data may include an operator code. The operator code (also denoted as "oPc") may be a secret identifier of the operator network.

The identification data may include an integrated circuit card identifier (ICCID). The ICCID may be a unique serial number for identifying a SIM profile for the SIM. Additionally or alternatively, the identification data may include an international mobile subscriber identity (IMSI). The IMSI may be any set of values used for establishing a connection to the operator network, which may include a mobile country code, a mobile network code, a mobile subscriber identification number.

The operating data may include an authentication counter. The authentication counter may be any value, e.g., a value p that may track a number of attempts for connecting to the operator networks, for example p=3 meaning that there have been three authentication attempts.

Each SIM may also comprise other data, for example, a list of the services the user has access to, and/or two passwords: a personal identification number (PIN) for ordinary use, and a personal unblocking key (PUK) for PIN unlocking. Other data may be for example, in Europe, a serial SIM number (SSN) which may also be accompanied by an international article number (IAN) or a European article number (EAN).

The memory 1020 includes a Hardware Security Module (HSM). The HSM may be configured to store safely data, e.g., by encrypting or decrypting the stored data. The HSM has stored thereon, for each respective SIM, respective data of the respective SIM including at least the confidential data of the respective SIM. In other words, the HSM has stored thereon, for each respective SIM the authentication key and/orthe operator code. Optionally, all of the data included in each SIM (that is, the confidential data, identification data and operating data) may be stored on the HSM. Alternatively, only a part of the data may be stored on the HSM, for example only the confidential data.

The processor 1030 is configured for accessing the memory 1020 to selectively retrieve each SIM. In other words, the processor is configured to read the data constitutive of each SIM and copy it, from the (non-volatile) memory 1020 to volatile memory (such as RAM), for processing. Optionally the processor may be configured to write on at least some (e.g. all) of the data. In yet other words, the processor may be configured to read only the memory 1020 or read-and-write the memory 1020. Accessing the memory 1020 to selectively retrieve each SIM includes accessing the HSM to selectively retrieve the respective data of each SIM stored on the HSM. In other words, the processor 1030 is configured to select one of (or all of) the confidential data, identification data, and operating data, e.g., the confidential data, identification data from memory 1020 and the operating data from the HSM, of all of the data included on each SIM from the HSM.

The processor 1030 is configured for generating and executing a plurality of pods. By "pod" it is meant a processing thread or execution having allocated CPU processing resources and storage resources, e.g., accessing non-volatile memory 1020 to obtain data and occupying space in RAM (i.e., volatile memory 1070). Such pod may be executed by the processor 1030 with an appropriate framework, e.g., as supported in the Kubernetes framework. Each pod contains a dispatcher and a plurality of SIMs retrieved from the (non-volatile) memory 1020. By "dispatcher", it is meant any set of instructions used for obtaining information from the network communication interface 1010 (e.g., such as a SIM affectation request, as detailed below) and for executing a selection of resources contained in the pod, e.g., a SIM. The plurality of SIMs (e.g., 100 or more even 1.000 or more) are retrieved from the non-volatile memory 1020 and hence stored in volatile memory 1070. In other words, once the pod is generated and executed, the HSM does not need to be accessed anymore (e.g., notably for accessing to the confidential data of each SIM contained in the pod). In yet other words, at least the confidential data is instantiated on the volatile memory 1070, so that all subsequent accesses to such data are performed on the volatile memory 1070.

The processor 1030 is configured for receiving a SIM affectation request via the network communication interface 1010. By "affectation request" it is meant any kind of data that starts an association of SIM-related data with a certain client device, such that such data can be used by such client for authorizing the client to the operator network and/or for performing telecommunications through said operator network. For example, The SIM affectation request may be any kind of data, e.g., transmitted from an external client device (via, for example, WI-FI, Bluetooth or another wireless communication network or alternatively a wired network) comprising instructions for affecting (i.e., assigning) such client device with SIM-related data (in other words, data related to a respective SIM). The processor may also be configured for receiving a SIM disaffection request. In other words, the processor may be configured for receiving any kind of data that may end (or pause) the association of the SIM related data with the client device, and so that the client device is no longer authorized for performing telecommunications through the operator network.

Upon reception of the SIM affectation request via the network communication interface 1010, the processor 1030 is configured for selecting a respective pod. The selection of the respective pod may be random, e.g., any pod may be suitable for such selection. In examples, the selection may be performed according to the number of available SIMs contained in a pod, that is, not already affected to other client devices.

Upon reception of the SIM affectation request via the network communication interface 1010, the processor 1030 is also configured for performing, by the dispatcher of the respective pod, establishing a secure connection for exchanging SIM-related data via the network communication interface 1010. In other words, the dispatcher may select a communication port via the network communication interface 1010 so that the server 1000 is securely connected (e.g., to an external client device). The secure connection may be any type of protocol for securely sending the SIM-related data, for example the SGP 02 eSIM Framework defined by the GSMA or using TLS via the http protocol.

In examples using the http protocol, the dispatcher may establish a plurality of TLS keys and certificates for performing data exchange. Thus, the dispatcher may perform, for example, SSL with Mutual authentication in a first exchange with the client device. The dispatcher may generate a private key and a CSR (certificate signing request) and provide it to the client device. If the object has been registered on the system, the dispatcher may provide it with an SSL Certificate. The exchange may be secured via http over TLS. The dispatcher may store this certificate with its private key and may now use an SSL with mutual authentication. For every subsequent connection, the client device and the server 1000 may establish a connection secured by SSL with Mutual Authentication. The server 1000 may be configured to retrieve the configuration of the client device, this configuration contains in particular the type of SIM that should be associated with this client device. The server 1000 may contact a manager service (implemented in software) to request a SIM based on the configurations retrieved. The manager software may automatically retrieve a SIM that corresponds to the profile type of the client device and exchanges commands with the SIM to begin its attachment to the network. At this time, to save time, certain usual exchanges between modem and the sim may be automated between the server 1000 and the SIM. The return of this exchange is provided to the client device via the software manager. The rest of the network authentication exchanges are done as would be done with a physical SIM card, the modem in communication with the SIM, via the server 1000.

Upon reception of the SIM affectation request via the network communication interface 1010, the processor 1030 is also configured for selecting a respective SIM of the respective pod.

The processor 1030 may also be configured to detect available SIMs configured in the respective pod. In examples, the processor 1030 may be configured to add, to a given pod already containing a plurality of SIMs, another plurality of SIMs dynamically, if the processor 1030 determines that a given pod does not contain free SIMs, in other words, SIMs contained in the pod which are already affected to other client devices. For example, the processor 1030 may be configured to add 100 more SIMs to the pod when determining that a pod contains 1,000 SIMs and that 999 SIMs are already affected to a client device. The processor 1030 may for example be configured to automatically detect if the SIMS are available to be affected to client devices and to add more SIMs as needed.

The processor 1030 is also configured for exchanging data, with the external client device on which the secure connection is established, related to the respective SIM via the network communication interface 1010. In other words, the respective SIM is affected to the client's device and the server 1000 exchanges SIM-related data so as to allow the authentication of the client device on the operator network and so as to allow data exchange of the client device through the operator network.

In examples, the confidential data of each SIM may include an authentication key and/or an operator code.

The processor 1030 may be configured for, upon receiving a telecommunication request for the respective SIM, sending the identification data via the network communication interface 1010. By "telecommunication request" it is meant any request by the client device to connect to the operator network. The telecommunication request may be performed in any time and in any manner, for example, upon affecting the SIM to the client device. The processor 1030 may send for example the IMSI of the SIM to the operator network.

An authorization request (by the operator network) may comprise a random number. The random number may be based on the IMSI and on the authentication key (the authentication key may be known by the operator network). The processor 1030 may also be configured for, upon receiving the authorization request (by the operator network after sending the identification data), generating authorization data from the authentication key, the operator code or the authentication counter, and sending the authorization data via the network communication interface 1010. The generation of the authorization data (also denoted as signed response "SRES_2") may comprise, for example, signing the authorization request (e.g., signing the random number) with the authentication key.

The processor 1030 may also be configured for, increasing the authentication counter upon reception of an authentication failure notification via the network communication interface 1010. For example, the authentication failure notification may be received when the operator network determines that the authorization data does not match with a respective data (also denoted as SRES_1) of the operator network, for example when the signed response SRES_2 does not match with the data SRES_1. If there is no authentication failure notification (for example, there is a match between the data SRES_2 and SRES_1, the client device may perform communication of data over the operator network.

This results in that the virtual SIM distribution is secure, highly efficient and seamless for the end user. The increase of efficiency is due thanks to the server 1000 relying on the plurality of pods for dispatching the plurality of SIMS. In other words, the server 1000 allows an efficient the distribution of SIMs to the plurality of client devices, in the form of a cloud service, which is seamless to the client device end and can scale up according to the demand. Indeed, the server 1000 is based on the fact that the elements specific to the SIM remain on the server 1000 while maintaining the authentication of the client device. The server 1000 and the client device are linked by the secure connection (e.g., a secure IP link) on which the SIM related data is exchanged so as to allow the authentication on the operator network (e.g., in the form of authentication sequence APDUs). As the SIMs are contained in the pods, the pods calculate the results of the affectation request, and return the results in the classic format of a SIM authentication, thus reducing the impact (for example, in the form of delays) of not having a SIM card plugged in to the client device. Moreover, the actual data of the SIM is not transferred to the client device, that is, the respective data of each SIM (including the confidential data and/or identification data, and operating data) is not transferred to the client device so that sensitive information is never exposed to security vulnerabilities. The authentication of the client device to the operator network is performed on the server's side, in other words, it is completely transparent to the client's side.

In examples, the exchange of SIM related data may be performed with a the APDU protocol.

As known per se in the field of telephony, a SIM (for example in form of a SIM card) is a slave and the operator network the master. The server may leverage from such a configuration. The server 1000 and the operator network may form a master-slave network so that the operator network issues APDU commands corresponding to requests and the server 1000 issues responses.

There may be four types of command APDUs that may be exchanged by the server 1000 and the operator network:
- An APDU command consisting of an exchange without data, that is, no data neither in the request by the operator network nor in the response by the server 1000.
- An APDU command consisting of an exchange without data in the request by the operator, but data is present in the response by the server 1000. An exchange of this type corresponds to an outgoing order from the server 1000.
- An APDU command consisting of an exchange whose request by the operator network includes data but not the response by the server 1000. This corresponds to an order entering the server 1000.
- An APDU command consisting of an exchange whose request by the operator network and response by the server 1000 includes data corresponding to a bidirectional order, incoming and outgoing.

An APDU request may consist of two parts: The first part is a 4-byte header (CLA INS P1 P2). The CLA, the instruction class. INS corresponds to the type of instruction which often corresponds to an order of reading, writing, recording, etc. P1 and P2 designate the parameters which can be the object on which the action is performed. The second part is a command body (which may be optional) containing the data to transfer if it exists and its size.

The processor 1030 may be configured to receive a plurality of inbound requests. The processor 1030 may also be configured to dynamically affect SIMs as the plurality of inbound requests increases or decreases. By "dynamically affecting" it is meant that the processor 1030 is configured to modify the affectation of the SIMs according to the level of demand due to the plurality of inbound requests. For example, the method may disaffect the SIM to a given client device upon detecting a lack or activity of said client device, for example in real-time or close to real time.

In examples, the processor 1030 may be configured to detect a disconnection of the client device. The processor 1030 may be configured to detect a voluntary triggering of such disconnection (also known as "graceful shutdown"). The processor 1030 may also be configured to detect an implicit trigger that is, the client device has not exchanged with the pod for a predetermined period of time.

The processor may send a request to switch off the SIM affected to the client. The processor may executes this request, for example, through the dispatcher, on the pod and receives the image from the SIM. The processor may encrypts the SIM into the HSM if it is not under further use or affect it to another device.

Additionally or alternatively (for example, in parallel to the above example), the processor may be configured to add new SIMs to a pod if a given pod is under capacity (for example, 999 SIMs may be already affected on a pod containing 1,000 SIMs). The processor may be configured to add new SIMs to the pod. Such SIM may be randomly selected from the HSM. The SIM may thus be suitable for affecting it to a new client device.

This increases the flexibility of the SIM distribution according to the level of existing demand.

Upon receiving the SIM affectation request via the network communication interface 1010, the processor 1030 may be further configured to generate a batch comprising a plurality of signed certificates. In other words, the processor 1030 may be further configured to generate a set of said plurality. A signed certificate may be any data allowing an authorization of a client device to be affected to a given SIM Each signed certificate may be associated with a respective SIM. Thus, certificates may be generated as batches and shared with so as to make the SIMs available to devices.

Alternatively, the processor 1030 may be further configured to generate on demand the signed certificates when dynamically affecting the one or more SIMs. This improves the security of SIM distribution, as only authorized client devices may be permitted to be affected to a given SIM.

The memory 1020 may further comprise a database.

By "database", it is meant any collection of data (i.e. information) organized for search and retrieval (e.g. a relational database, e.g. based on a predetermined structured language, e.g. SQL). When stored on a memory, the database allows a rapid search and retrieval by a computer. Databases are indeed structured to facilitate storage, retrieval, modification, and deletion of data in conjunction with various data-processing operations. The database may consist of a file or set of files that can be broken down into records, each of which consists of one or more fields. Fields are the basic units of data storage. Users may retrieve data primarily through queries. Using keywords and sorting commands, users can rapidly search, rearrange, group, and select the field in many records to retrieve or create reports on particular aggregates of data according to the rules of the database management system being used.

The database may have stored thereon one or more client identifiers. Each client identifier may be a piece of data that uniquely determines a client device.

The processor 1030 may be further configured to associate a stored client identifier corresponding to the client with the SIM-related data upon affecting the SIM to the client. In other words, the processor 1030 may be configured to associate, in the database, said client identifier with the exchanged SIM-related data. This improves the efficiency of the affectation of SIMs onto client devices. Indeed, at the level of the database, the server maintains a unique client device - SIM link as well as security so that two SIMs cannot be associated with the same client device.

Examples of the association of the client identifier with the exchanged SIM-related data are now discussed.

In an example, the server may receive a client device request for using a SIM so as to integrate a new client for SIM distribution.

The processor 1030 may be configured for generating client-related data for this request. The processor 1030 may be configured for exchanging personalization data to an MNO for configuration in its core network. The processor 1030 may be configured for creating a personalization script for each SIM. The script is adapted to the need and is provided to a SIM provisioning interface. The SIM provisioning interface may launch commands of this script to a white SIM image, which creates a personalized SIM image (that is, a client identifier with the exchanged SIM-related data). The processor may be configured for sending such SIM image to a SIM manager for storing it in the HSM (e.g., waiting to be possibly launched in a pod).

The processor 1030 may be configured to delete a SIM of the server. For example, the processor 1030 may be configured for receiving a customer request for SIM deletion. The processor 1030 may be configured for disconnecting a SIM associated with such request, e.g., if it is already affected to a client device. The processor may be configured for deleting the association of the client identifier with the exchanged SIM-related data in the database. The processor 1030 may be configured for updating of the status of this SIM to "deleted". For example, the processor 1030 may be configured for definitely deleting a SIM in the database (e.g., associated to an unactive client) after a predetermined number of time, for example a number X of days (e.g., 1 day or more).

Examples of the server 1000 and client device 2000 are described below with reference to FIG.s 3 to 7.

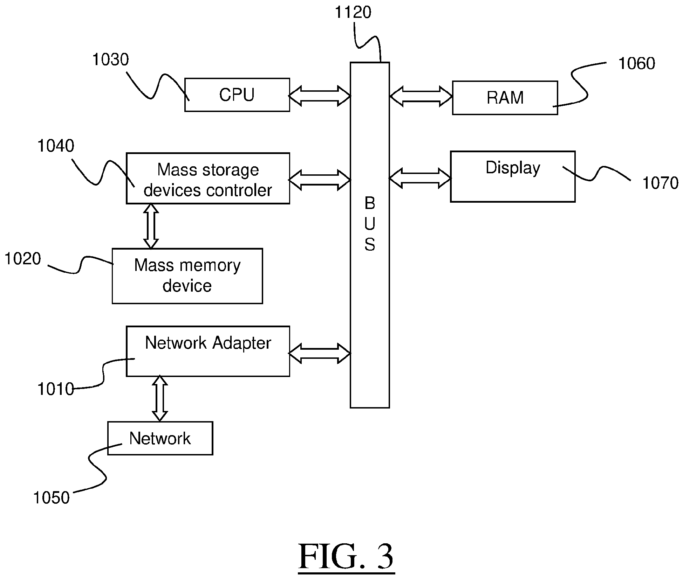

Another implementation of the server 1000 is discussed in FIG. 3.

The server of the example comprises a central processing unit (CPU) 1030 connected (coupled) to an internal communication BUS 1120, a random access memory (RAM) 1070 (that is, volatile memory) may also be connected to the BUS. The server may be optionally further provided with a graphical processing unit (GPU) (not shown) which may be associated with a video random access memory 1100 connected to the BUS. An optional mass storage device controller 1040 may manages accesses to a mass memory 1020 device (that is, a non-volatile memory), such as hard drive and/or an HSM. Mass memory devices suitable for tangibly embodying computer program instructions and data include all forms of nonvolatile memory, including the HSM and, by way of example semiconductor memory devices, such as EPROM, EEPROM, and flash memory devices; magnetic disks such as internal hard disks and removable disks; magneto-optical disks. The mass memory device may also store a database. The mass memory device is any hardware adapted for such storage, possibly comprising several physical distinct parts (e.g. one for the program, and possibly one for the database). Any of the foregoing may be supplemented by, or incorporated in, specially designed ASICs (application-specific integrated circuits). A network interface 1010 manages accesses to a network 1050. The server may optionally include a haptic device such as cursor control device, a keyboard or the like. A cursor control device is used in the server to permit the user to selectively position a cursor at any desired location on display 1070. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the server system may comprise a sensitive pad, and/or a sensitive screen.

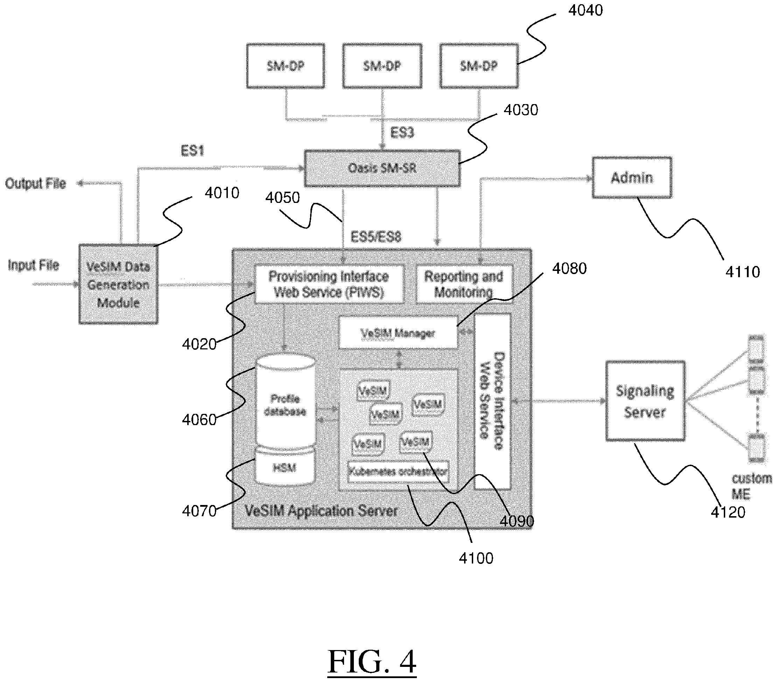

FIG. 4 illustrates an implementation of the server. The server may comprise as components an application server which generates and executes the plurality of pods and the HSM which secures the confidential data.

The server may comprise data generation module 4010. The data generation module (also called "provisioning interface") creates initial provisioning profiles for each SIM. Such SIMs are to be loaded into the a respective pod for SIM distribution and saved to a database 4020 (also denoted subscription manager secure routing (SM-SR) EIS database).

The server may store the in the SM-SR EIS database. The server may be considered as electronic universal integrated circuit (eUICC), although fully virtual, for a subscription manager data preparation (SM-DP) and the SM-SR.

The server may comprise an ES3 interface 4030 (GSMA) between the SM-DP 340 (which may be a third party device) and the SM-SR.

The SM-DP profile may be transferred 4050 (or downloaded) to the provisioning interface 4010 via SM-SR. The provisioning interface 4010 behaves like an eUICC for the SM-DP. The SM-DP profile download may be performed using an ES8 protocol transaction encapsulated in ESS in accordance with the GSMA protocol.

The configuration process follows the profile download procedure defined by the GSMA SGP.02 standard. Each SIM behaves like an eUICC to receive the GSMA profile from the remote SM-DP. Profiles are stored as security domains in the server profile database 4060. Sensitive data is stored in the HSM 4070.

The processor may be configured to implement a SIM Manager module 4080 which manages the life cycle of pods, which contains one or more (e.g., a plurality) of SIM instances 4090. The SIM Manager module 4080 is responsible for launching SIM instances and assigning a SIM profile to each SIM instance. It also manages logic to delete the profile or reuse each SIM profile for a respective client device. The processor may implement dispatching each SIM with a Kubernetes orchestrator.

The server may also comprise an interface 4120 with the Reporting and Monitoring module providing the status of SIM and the profiles database4060.

The server may interface 4120 with an external client device (not pictured). The server is thus configured to provide standard SIM functionality, e.g., for 4G and 5G network authentication.

The server may also comprise an HTTP notification interface to replace the standard SMS-push in order to open the HTTPS channel for profile downloading.

The server is thus a unique architectural approach, as it provides a fully virtualized SIM solution meeting the protocol and security requirements defined by the GSMA (SGP.01, SGP.02, SGP.11)

The complete virtualization of the SIM card may be made within a Linux architecture.

The server allows for real time sharing of the Crypto processor of the HSM (where the SIM keys are stored) by pools of SIM contained by pods which may be deployed by using a Kubernetes environment.

The combined usage of an HSM for the storage of confidential data (the HSM being for example for storing class 1 data) and the pods for affecting SIMs (deployed in the Kubernetes container environment for example) allows a ramp-up of the solution which allows an efficient and scalable distribution of SIMs.

Classical UICC and eUICC (in other words, SIM cards or eSIMs) need a single dedicated processor per card. In contrast, the server allows the centralization of the computation on a server processor for the plurality of SIMs, which allows for a significant economy of scale.

Classical UICC and eUICC security leverage on a secure element and the physical separation between two SIM Cards. In contrast, the server leverages from Linux and cloud infrastructure to provide a similar level of security. The SIM separation may for example be ensured by SIMS running as different Linux processes with separate memory space. When not in use, each SIM image may be stored in the HSM.

The server controls the binding of the device and SIMs. The registration of the device on the Server require, e.g., a device EMEI to be registered

Once the device is registered, the a SIM client software may be installed into the device to be affected with a Certificate Authority of the server, via an interface, and be given a SSL Certificate.

This certificate authority allows: first, the use of SSL with Mutual authentication between the client device and the server. Second, the use of certificate repudiation to block unwanted devices. Third, a simplified manufacturing process, as the same client software is installed on the device. The differentiation between every devices is automatically performed by the client device, the interface and the certificate authority of the server.

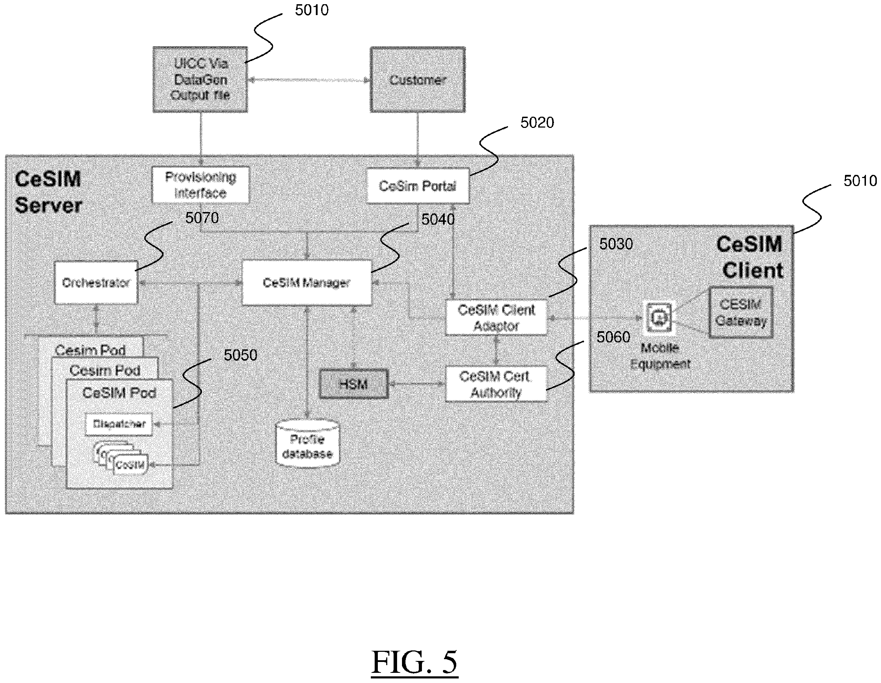

FIG. 5 shows another implementation of the server.

The server's processor may be configured to comprise the following modules: a SIM Client 5010 (also called "SIM Gateway"), a server user portal 5020, a client adaptor 5030, a SIM manager 5040, pods containing the SIMs 5050 and a certificate authority 5060.

The SIM client 5010 may comprise a client software; which is an application that is executed on the client device and that communicates to the server via a communication interface so as to be affected to a SIM. Once the client device is affected, the client device exchanges SIM commands between, e.g., a local modem and the SIM.

The user portal 5020 provides a Graphical User interface and an API set to allow users to: register client devices, manage profile templates and device pools. The user portal 5020 also provides a list of events for each device and can notify a user about the connections and disconnections by the device to the SIM's operator network.

The user portal 5020 also provides a list of connection for each device, mapped to profile types, duration, dates.

The client adaptor 5030 is the module in charge, within the server's environment, of interfacing directly with the client device. In other words, the client adaptor 5030 may comprise receiving the SIM affectation request via the network communication interface.

The client adaptor 5030 accepts inbound requests and validates them (by validating, e.g., certificates, imei, among others.) by querying the user portal 5020 (for instance performing a verification that the client device is registered) and the certificate authority 5060 to verify certificate validity.

The client adaptor 5030 allocates, once the client is authenticated, a SIM for the client device and enables SIM command exchanges between the client device and the SIM contained in the pod which is affected to the client device.

The SIM manager 5040 is configured to perform: storing a SIM into the HSM when not in use, making SIMs available for use by the dispatcher, managing SIM status (such as available or in use) and lifecycle. The SIM manager 5040 is also configured for assigning a SIM to a client device validated by the client adaptor. The SIM manager is also configured to interface with the HSM to ensure SIMs are fully protected in the HSM.

The SIMS are contained in a pod. A plurality of SIMs are contained in respective pods so as to provide an improved system resource usage efficiency.

Each pod contains SIM (around 1,000 in the present implementation) as well as a dispatcher. The number of pod and the number of SIMs per pod may be managed by a SIM Orchestrator 5070. The SIM orchestrator 5070 enables auto-scale up and scale down of the pods.

The connection between client adaptor 5030 and the SIM is done directly, the dispatcher is responsible of selecting an available TCP port, executing start up and shutting down command based on the orchestrator 5070 decisions.

The certificate authority 5060 is configured for providing signed certificates required by to authenticate the client device to the client adaptor 5030. The certificate authority may provide a revocation list for a subset of signed certificates. The signed certificates may be alternatively generated as batches and shared with the relevant factory if the it is chosen to preinstall the client software, keys, and certificates on the client devices, or live if it is chosen that client software is to be installed on device after production. Security measures exist to ensure only the right devices can request certificates by themselves.

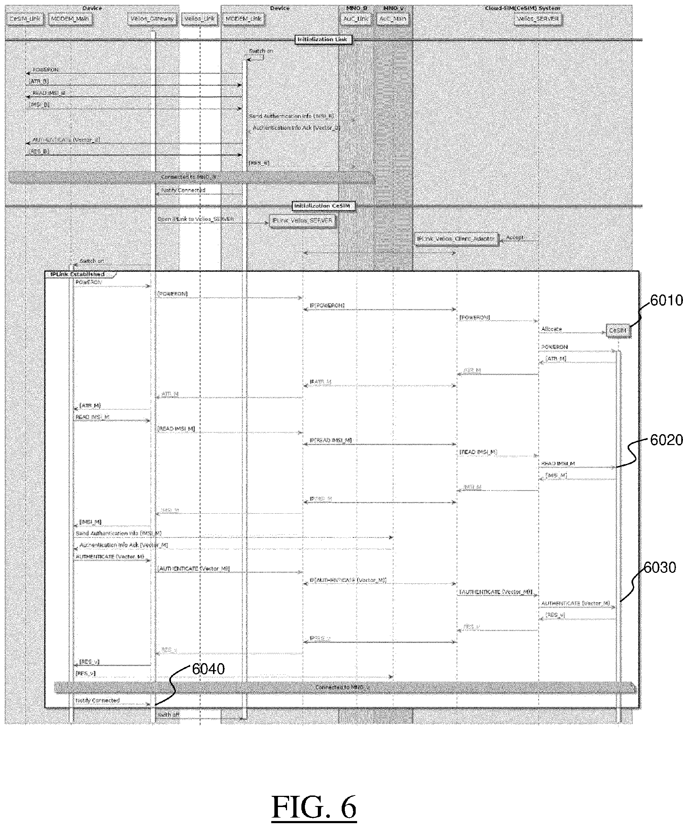

FIG. 6 illustrates the communication between the server and the client device. FIG. 6 illustrates an IP link established between the client and the device. The client may request to be affected with a SIM 6010. The client device may send an IMSI request to the server, which may be answered back as a message MSI_M. The client may send an authentication vector to the server so as to be authenticated by the server 6030. After successful notification, the client device may send a connection notification 6040 to the server. All of this process is seamless and transparent to the end user.

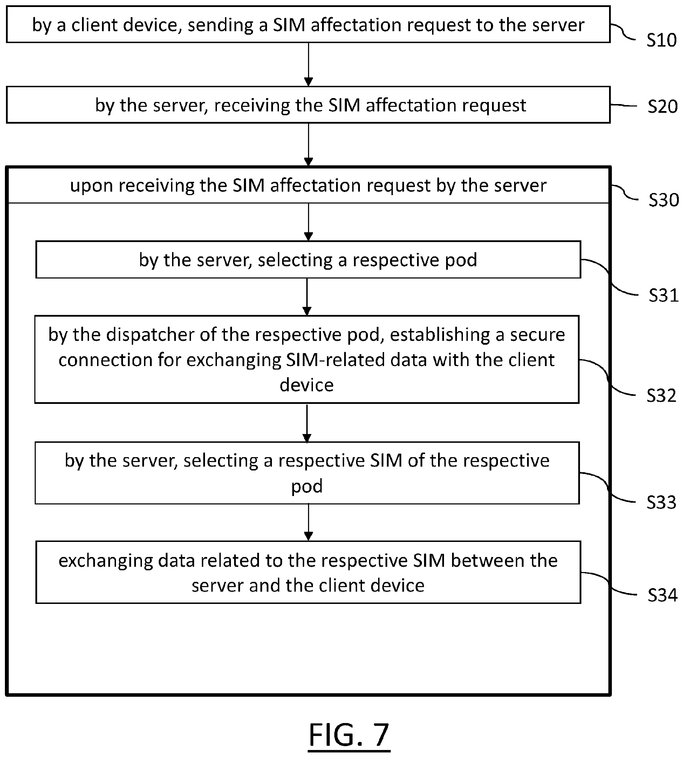

FIG. 7 shows a flowchart of the system method.

The system method comprises, by a client device of the plurality of client devices, sending S10 a SIM affectation request to the server. The system method also comprises, by the server, receiving S20 the SIM affectation request. The system method also comprises, upon receiving S30 the SIM affectation request by the server, by the server, selecting S31 a respective pod. The system method also comprises, by the dispatcher of the respective pod, establishing S32 a secure connection for exchanging SIM-related data with the client device. The system method also comprises, by the server, selecting S33 a respective SIM of the respective pod. The system method also comprises, exchanging S34 data related to the respective SIM between the server and the client device.

## Claims

1. A virtual Subscriber Identity Module (SIM) distribution server (1000) comprising:
- a network communication interface (1010),
- a memory (1020) having stored thereon one or more SIMs, each SIM including confidential data, identification data, and operating data, the memory (1020) including a Hardware Security Module (HSM) having stored thereon, for each respective SIM, respective data of the respective SIM including at least the confidential data of the respective SIM, and
- a processor (1030) coupled to the network communication interface and to the HSM, the processor (1030) being configured for:
-- accessing the memory to selectively retrieve each SIM, including accessing the HSM to selectively retrieve the respective data of each SIM stored on the HSM;
-- generating and executing a plurality of pods, each pod containing a dispatcher and a plurality of SIMs retrieved from the memory;
-- receiving a SIM affectation request via the network communication interface;
-- upon receiving the SIM affectation request via the network communication interface:
--- selecting a respective pod;
--- by the dispatcher of the respective pod, establishing a secure connection for exchanging SIM-related data via the network communication interface;
--- selecting a respective SIM of the respective pod; and
--- exchanging data related to the respective SIM via the network communication interface.

2. The server of claim 1, wherein the processor (1030) is configured to receive a plurality of inbound requests, and to dynamically affect SIMs as the plurality of inbound requests increases or decreases.

3. The server of claim 1 or 2, wherein upon receiving a SIM affectation request via the network communication interface (1010), the processor (1030) is further configured to perform, alternatively:
- generating a batch comprising a plurality of signed certificates, each signed certificate being associated with a respective SIM; or
- generating on demand the signed certificates when dynamically affecting the one or more SIMs.

4. The server of any one of claims 1 to 3, wherein the memory (1020) further comprises a database, the database having stored thereon one or more client identifiers, the processor (1030) being further configured to associate a stored client identifier corresponding to the client with the SIM-related data upon affecting the SIM to the client.

5. The server of any one of claims 1 to 4, wherein, for each SIM:
- the confidential data includes an authentication key and/or an operator code;
- the identification data includes an integrated circuit card identifier (ICCID) and/or an international mobile subscriber identity (IMSI); and/or
- the operating data includes an authentication counter.

6. The server of claim 5, wherein the confidential data of each SIM includes an authentication key and/or an operator code, the processor (1030) being configured for:
- upon receiving a telecommunication request for the respective SIM, sending the identification data via the network communication interface;
- upon receiving an authorization request, generating authorization data from the authentication key, the operator code or the authentication counter, and sending the authorization data via the network communication interface; and
- increasing the authentication counter upon reception of an authentication failure notification via the network communication interface.

7. A client device (2000) comprising a network communication interface and a processor (2010) configured for communicating via the network communication interface (2020) with a server according to any one of claims 1 to 6, so as to send a SIM affectation request to the server, and to exchange SIM-related data with the server via a secure connection.

8. A method carried out by a virtual SIM distribution server according to any one of claims 1 to 6 in communication via a communication network with a plurality of client devices each according to claim 7, the method comprising:
- by a client device, sending (S10) a SIM affectation request to the server;
- by the server, receiving (S20) the SIM affectation request;
- upon receiving (S30) the SIM affectation request by the server:
-- by the server, selecting (S31) a respective pod;
-- by the dispatcher of the respective pod, establishing (S31) a secure connection for exchanging SIM-related data with the client device;
-- by the server, selecting (S32) a respective SIM of the respective pod; and
-- exchanging (S33) data related to the respective SIM between the server and the client device.

9. The method of claim 8, further comprising, by the server, receiving a plurality of inbound requests from several client devices, and dynamically affecting SIMs as the plurality of inbound requests increases or decreases.

10. The method of claim 9, further comprising, by the server upon receiving a SIM affectation request, performing, alternatively:
- generating a batch comprising a plurality of signed certificates, each signed certificate being associated with a respective SIM; or
- generating on demand the signed certificates when dynamically affecting the one or more SIMs.

11. The method of claims 8 to 10, further comprising, by the server, associating a stored client identifier corresponding to the client with the SIM-related data upon affecting the SIM to the client.

12. The method of any one of claims 8 to 11, wherein, for each SIM:
- the confidential data includes an authentication key and/or an operator code;
- the identification data includes an integrated circuit card identifier (ICCID) and/or an international mobile subscriber identity (IMSI); and/or
- the operating data includes and authentication counter.

13. The method of claim 12, the confidential data of each SIM including an authentication key and/or an operator code and wherein, by the server, performing:
- upon receiving a telecommunication request for the respective SIM, sending the identification data via the network communication interface;
- upon receiving an authorization request, generating authorization data from the authentication key, the operator code, the authentication counter, sending the authorization data via the network communication interface; and
- increasing the authentication counter upon reception of an authentication failure notification via the network communication interface.

14. A computer program for a virtual SIM distribution server according to any one of claims 1 to 6 and/or for a client device according to claim 7, the program comprising instructions for performing the method of any of claims 8 to 13.

15. A computer readable storage medium having recorded thereon a computer program according to claim 14.
